(19) Europäisches Patentamt / European Patent Office / Office européen des brevets

(11) **EP 4 198 927 A1**

(12) **EUROPEAN PATENT APPLICATION**

(43) Date of publication:
**21.06.2023 Bulletin 2023/25**

(21) Application number: **21306773.9**

(22) Date of filing: **14.12.2021**

(51) International Patent Classification (IPC):
**G06V 40/16** (2022.01)    **G06V 10/10** (2022.01)
**G06V 10/82** (2022.01)    **G06K 9/62** (2022.01)

(52) Cooperative Patent Classification (CPC):
**G06V 40/161; G06F 18/24133; G06V 10/10;**
**G06V 10/82; G06V 40/171; G06V 40/172**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Thales Dis France SAS**
  **92190 Meudon (FR)**
• **THALES**
  **92400 Courbevoie (FR)**
• **Board of Trustees of Michigan State University**
  **East Lansing, MI 48824 (US)**
• **INRIA - Institut National de Recherche en Informatique et en Automatique**
  **78150 Le Chesnay (FR)**

(72) Inventors:
• **ANGHELONE, David**
  **74300 CLUSES (FR)**
• **FAURE, Philippe**
  **92190 MEUDON (FR)**
• **CHEN, Cunjian**
  **EAST LANSING, 48824 (US)**
• **DANTCHEVA, Antitza**
  **06902 SOPHIA ANTIPOLIS CEDEX (FR)**
• **STRIZHKOVA, Valeriya**
  **06902 SOPHIA ANTIPOLIS CEDEX (FR)**

(74) Representative: **Atout PI Laplace**
**Immeuble "Visium"**
**22, avenue Aristide Briand**
**94117 Arcueil Cedex (FR)**

(54) **THERMAL FACE AND LANDMARK DETECTION METHOD**

(57)    A thermal face and landmark detection method comprises:
providing a ground truth reference database,
capturing a thermal image (10) comprising at least one face (20);
detecting a face (21) in the thermal image (10);
cropping (30) the thermal image (10) creating a cropped face thermal image (35);
applying a Gaussian filters method (40) to the cropped face thermal image (35) creating an improved cropped face thermal image (45); and
applying a landmark detector (50) to the improved cropped face thermal image (45) creating an landmarked cropped face thermal image (55).

FIG. 1

**Description**

TECHNICAL FIELD

The present invention relates to a thermal face and landmark detection method and a method for creating a landmark database of a thermal face image set as ground truth reference.

PRIOR ART

Similarly to classical Face Recognition (FR) systems, Cross spectral Face Recognition (CFR) systems requires face detection and alignment process as first and foremost processing steps. While it might be easy to perform landmark detection on RGB-face images (visible spectrum), it remains a challenge in the context of thermal spectrum. In particular, thermal face images tend to have low contrast, low resolution and lack of texture information. Therefore, existing work dealing with visible face suffers from the modality gap and does not effectively extract facial key points when applied directly in the thermal domain. Furthermore, the lack of available annotated thermal dataset impart very limited work focused on thermal facial landmarks detection.

Prior art on this field are inter alia:

- POSTER, Domenick, HU, Shuowen, NASRABADI, Nasser, et al. "An examination of deep-learning based landmark detection methods on thermal face imagery" in : Proceedings of the IEEE/CVF Conference on Computer Vision and Pattern Recognition Workshops. 2019. p. 0-0.
- CHU, Wei-Ta et LIU, Yu-Hui. "Thermal facial landmark detection by deep multi-task learning." in : 2019 IEEE 21st International Workshop on Multimedia Signal Processing (MMSP). IEEE, 2019. p. 1-6.
- MALLAT, Khawla et DUGELAY, Jean-Luc. "Facial landmark detection on thermal data via fully annotated visible-to-thermal data synthesis" in : 2020 IEEE International Joint Conference on Biometrics (IJCB). IEEE, 2020. p. 1-10.
- KEONG, Jin, DONG, Xingbo, JIN, Zhe, et al. "Multi-spectral Facial Landmark Detection" in : 2020 IEEE International Workshop on Information Forensics and Security (WIFS). IEEE, 2020. p. 1-6.
- POSTER, Domenick D., , Sshuowen, SHORT, Nathan J., et al. "Visible-to-thermal transfer learning for facial landmark detection" IEEE access, 2021, vol. 9, p. 52759-52772.

Most prior approach have focused on existing visible spectrum methods, such as Deep Alignment Network (DAN), Multi-task Cascaded Convolutional Networks (MTCNN) or Active Appearance Model (AAM) and tried to be adapted for the thermal spectrum. However, the large inter-spectral difference led to inaccurate detection results.

Nevertheless, face and landmarks detection through the thermal spectrum can also be addressed by designing a network based on Generative Adversarial Network (GAN), which translates facial images from the thermal spectrum to the visible spectrum. Once the spectral translation is applied, facial key point could then be extracted and shared on the original thermal face. However, the facial identity is not preserved during the spectral transformation and means that salient regions of the face have not the same appearance than the reality. As a result, the methodology provides poor facial key point locations.

SUMMARY OF THE INVENTION

It is an object of the present invention to provide a reliable thermal face and landmark detection method in unconstrained environment (adaptive to in-the-wild scenario) which overcomes the scarcity of previous known thermal-only face landmark detection work, while being robust to different conditions such as (1) facial pose, (2) facial expression, (3) facial occlusion, (4) poor image quality and (5) long range distance.

Additionally, the inventors have found that the necessary initial automatic ground truth annotation database necessary as starting point for the deep learning method can be used, while gathering data from different public thermal datasets, to establish a benchmark for face and landmarks detection as well as automatic ground truth annotations in the thermal field.

The present method solves the problem (i) scarcity of annotated thermal face database and (ii) lack of method for thermal face detection as well as thermal landmark face detection.

(i) Few thermal face dataset contain labeled images and usually includes limited numbers of key points (around 5: left and right eyes, nose and corner left and right mouth).

Existing labeled dataset with such low key points can be enhanced by applying a key point augmentation up to 68 landmarks. To enable the key point augmentation the present method rely on Dlib, a state of the art facial detector which extract 68 landmarks representing salient regions of the face such as Eyes, Eyebrows, Nose, mouth and jawline is applied.

Considering a large scale database including synchronized and aligned visible-thermal face, facial landmarks are extracted from the visible face and shared to the thermal counterpart face in order to be used as ground truth reference.

(ii) There are two embodiments:

In one embodiment, the present invention considers face and landmarks detection as a sub-task of traditional object detection model and thus can involves YoloV5. Particularly, the invention designs a series of two successive YoloV5 models M1 and M2, respectively. M1 is dedicated to detect the entire face on thermal imagery while M2 is used to detect the 68 learned facial key point on the prior detected cropped-face by primarily applying a "Face Super Resolution" (FSR) post-processing filter. It is preferred to name this approach application of Gaussian filters as post-processing filter. By applying these filters, many visual details are highlighted, improving edge quality, contrast and sharpness of the face and ultimately allowing better detection accuracy.

In the other embodiment, the present invention also considers face and landmarks detection as a sub-task of traditional object detection model and thus can involves YoloV5. Particularly, the invention designs a series of two successive YoloV5 models M1 and M2, respectively. Here, a pre-processing filter TFR for Thermal Face Restoration filter is used on the data from the thermal sensor to produce an enhanced image. Only then the network is fed with the pre-processed and filtered thermal image, where M1 is dedicated to detect a set of Fn faces and provides for each of them the cropped image, while M2 is used to detect the face and already enhanced 68 learned facial key point on the cropped image. By applying these filters, many visual details are highlighted, improving edge quality, contrast and sharpness of the face and ultimately allowing better detection accuracy.

By adopting the (i) and (ii) above approaches, the invention is capable of detecting faces and landmarks in challenging conditions as well as in almost all thermal images in the wild. The present invention in particular offers the ability to detect a large amount of thermal facial key points. On the other hand, the invention can additionally in a second application be used as a rich automatic annotation tool for all thermal face database without referenced data.

The main features of the present invention are the following:

A series of two successive object detector for face and landmarks detection respectively are applied, while being robust to different conditions in unconstrained environment (adaptive to the in-the-wild scenario). Within a specific embodiment the object detector YoloV5 was applied for the task of thermal face and landmarks detection and the resulting detection performance gives accurate facial key points. Benefits from YoloV5 provides to the invention a real-time face and landmarks detection.

To achieve a much accurate detection, a filter scheme is to be applies. This can be e.g. a Gaussian Filter or a Face Super Resolution (FSR) scheme provided as post-processing filter. However, it is preferred to provide a Thermal Face Restoration (TFR) pre-processing filter on the thermal image, i.e. before the cropping step.

The invention allowed the model trained on a large scale face images containing millions of images. This dataset was augmented by a set of wide array of different conditions including low resolution images, sharp images and occluded images.

The quality of landmarks affect the quality of the face alignment and face recognition. In this context a landmark is a point which all the faces share and which has a particular biological meaning.

The invention comprises a thermal face and landmark detection method with the features of claim 1. Within this method is preferably applied an object detector for detecting the face. It is preferred that the models behind the object detector and the landmark detector are based on Yolo, especially YoloV5.

A method for creating a landmark database of a thermal face image set as ground truth reference database is disclosed in claim 4. The visible image facial landmarks can represent salient regions of the face, especially taken from the group comprising eye, eyebrows, nose, mouth and jawline. In order to discriminate for the left and for the right version of eyes or eyebrows, the vertical symmetry axis of the visible image facial landmark of the nose is used.

Extracting visible image facial landmarks can be based on Dlib, but also other multi-landmark comprising sets can be used.

The thermal images of a visible image- thermal image pair can be augmented, especially augmented by introducing a set of a 4 circles occlusion, a 4 rectangles occlusions, a low resolution degradation and a FSR enhancement to enhance robustness of the method.

A thermal face recognition method can comprise an initial offline creation step of a ground truth reference database according to any one of claims 4 to 8 and a subsequent real-time online face recognition step according to any one of claims 1 to 3.

Finally, the landmark ground truth reference database according to any one of claims 4 to 9 can be used for annotating a thermal face database without referenced data.

Further embodiments of the invention are laid down in the dependent claims.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1 shows a flowchart of a thermal face and landmark detection method according to an embodiment of the invention;
Fig. 2 shows a flowchart of a thermal face and landmark detection method according to a further embodiment of the invention;
Fig. 3 shows on the left a visible light face image and on the right a thermal face image;
Fig. 4 shows a data augmentation step of an original thermal image to enhance robustness of the recognition;
Fig. 5 shows two sets of visualizations of various faces and relating landmark detection for baseline and expression; and
Fig. 6 shows two graphs relating to the results of measurements of Fig. 5.

DESCRIPTION OF PREFERRED EMBODIMENTS

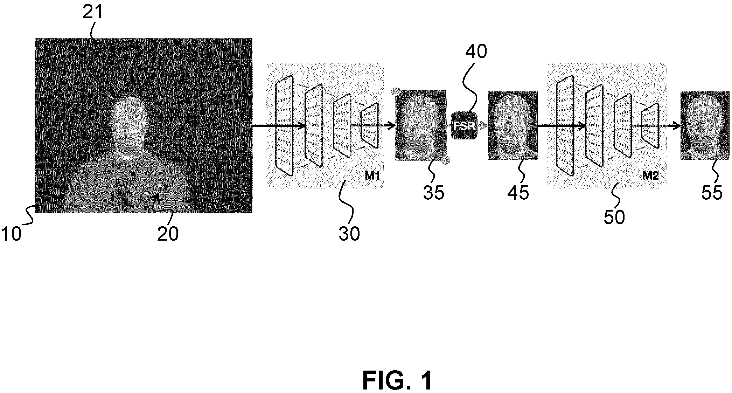

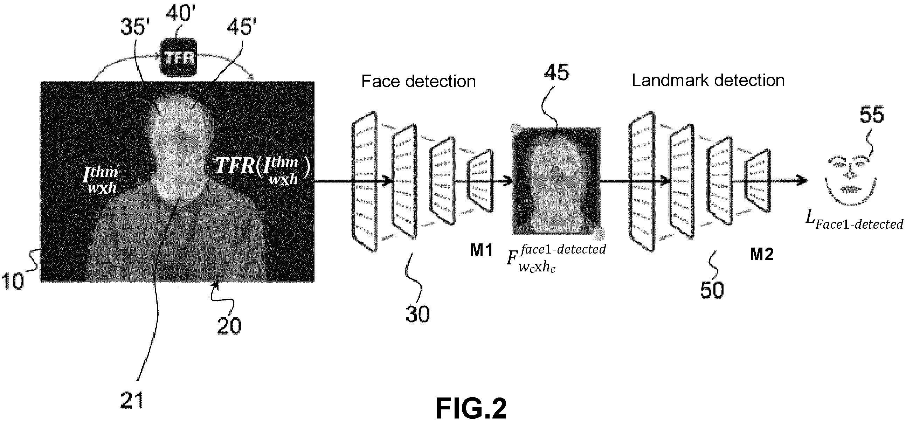

Fig. 1 and Fig. 2 both show a flowchart of a thermal face and landmark detection method according to two different embodiments of the invention. The method shown in Fig. 2 is the preferred method. The method starts with an initial offline creation step of a ground truth reference or landmark database of a thermal image set which will be explained later.

The subsequent real-time online face recognition step comprises capturing a thermal image 10 comprising at least one face 20. It is possible that the image comprises a number of different faces at different positions in the thermal image 10. Then one single face 21 is detected in said thermal image 10. Of course, other single faces can be detected as well and will be handled subsequently. The thermal image 10 is cropped which is marked as reference numeral 30 and this method step is also marked as M1. The cropping step creates a cropped face thermal image 35.

M1 as a neural network is firstly fed by $I_{w \times h,n}^{thm}$, an image n, being thermal thm and having a width w and a height h. M1 starts to detect a set of $F_n$ faces and provides for each of them the corresponding cropped face $F_{w_c \times h_c,n}^{f}$, a face F with the current number f and the cropped width $w_c$ and a cropped height $h_c$ in image n.

In other words:

$$M1(I_{w \times h,n}^{thm}) = \begin{cases} \emptyset & \text{if } F_n = 0 \\ \bigcup_{f=1}^{F_n} F_{w_c \times h_c,n}^{f} & \text{otherwise,} \end{cases}$$

A Gaussian filters method 40 is applied to i-th the cropped face $F_{w_c \times h_c,n}^{f}$ thermal image 35 creating an improved cropped face $FSR(F_{w_c \times h_c,n}^{f})$ thermal image 45. The Gaussian filters method 40 can also be mentioned as being a Face Super Resolution FSR.

Motivated by thermal sensors providing both poor image quality and low spatial resolution, improving the image quality is essential for performing accurate facial landmark locations. Therefore, the cropped face thermal image 35 is submitted to a Face Super Resolution (FSR) post-processing filter in order to reveal many visual details and enhance edge quality, contrast and sharpness. FSR is based on a combination of several Difference of Gaussians (DoG) filters consisting of following (3; 3); (5; 5) and (9; 9) Gaussian kernel size. Given a thermal image $I_{w \times h}^{thm}$ being the image 35, the FSR image 45 resulting after application can be written as $FSR(I_{w \times h}^{thm})$. The present method according to this first embodiment uses the above mentioned cropped faces $F_{w_c \times h_c,n}^{f}$.

The second embodiment uses a preprocessing filter TFR 40' applied on the image 20 as such. In other words, the original image 35' is enhanced by applying the filter 40' to the enhanced image 45' but working on the image of width w and height h for all n faces in the image:

$$M1(TFR(I_{w \times h,n}^{thm})) = \left\{ \begin{array}{ll} \emptyset & \text{if } F_n = 0 \\ \bigcup_{f=1}^{F_n} F_{w_c \times h_c,n}^f & \text{otherwise,} \end{array} \right.$$

The TFR filter 40' is based on a combination of several Difference of Gaussians (DoG) filters consisting of following (3; 3); (5; 5) and (9; 9) Gaussian kernel size. Given a thermal image $I_{w \times h}^{thm}$ being the image 35', the TFR image 45' resulting after application can be written as $TFR(I_{w \times h,n}^{thm})$. Then the cropped image 45 is generated for the next step of application of the landmark detector.

A landmark detector 50 is applied to the improved cropped face thermal image 45 creating a landmarked cropped face thermal image 55. This landmark detector 50 also marked as M2 is used to produce the final landmarks output. For $F_n \neq 0$ and all $f \in [1,F_n]$, the landmark detector M2 attempts to give a set $L_{f,n}$ of 68 landmarks corresponding to the f-.th face of the n-th image as:

-   for the first embodiment: $M2(FSR(F_{w_c \times h_c,n}^f)) = L_{f,n}$.

-   for the second embodiment: $M2(F_{w_c \times h_c,n}^f) = L_{f,n}$.

In particular $L_{f,n} = \bigcup_{k=1}^{68} l_k^{f,n}$ where $l_k^{f,n}$ refers to the coordinates $(x_k^{f,n}, y_k^{f,n}) \in \mathbb{R}^{w_c \times h_c}$ of the k-th landmark present in the f-th face of the n-th image. In case $l_k^{f,n}$ is miss-detected, M2 returns an empty point. Finally, for all $f \in [1, F_n]$, $L_{f,n}$ is reported on the original $I_{w \times h,n}^{thm}$ thermal input image given therefore the final landmark locations. The number of landmarks, here 68 depends on the library used. Dlib just provides 68 landmarks.

Now, this cropped face thermal image 55 is used in a face recognition step through applying face recognition on the landmarked cropped face thermal image 55 against the ground truth reference.

The method according to an embodiment of the invention applies a series of said two successive object detector models, M1 and M2, for face and landmarks detection respectively, while being robust to different conditions in unconstrained environment, i.e. thermal image in the wild.

As explained above Fig. 2 shows a slight modified flowchart of a thermal face and landmark detection method according to a further embodiment of the invention and all reference numerals depicting same or similar features have received identical references above and throughout the drawings.

It is possible to apply the object detector Yolo and especially YoloV5 for this task of thermal face and landmarks detection. Resulting detection performance gives accurate facial key points. A further benefit using YoloV5 provides the method real-time face and landmarks detection. Either, the two tasks as provided by M1 and M2 are separated by a post-processing filter according to the first embodiment or M1 and M2 follow each other but are preceded by a preprocessing filter, both options allowing for a more accurate detection. M1 has the purpose of detecting the region of interest that contains faces from the background while M2 aims to extract on the prior cropped region said up to 68 landmarks by being robust to different conditions such as facial pose, facial expression, facial occlusion, poor image quality and long range distance. $I_{w \times h,n}^{thm}$ is the thermal image of an image belonging to the set $\{I_{w \times h,n}^{thm}\}_{n=1}^N$ N thermal images. The value of each element is between 0 and 255 wherein due to the nature of thermal imagery a face will emit a significant amount of heat and thus will appear as high light intensity.

The method as mentioned rely on a two stage detection, face and landmarks. Therefore, two metrics used for quantitatively evaluate (i) the thermal face detection 30 and (ii) the thermal landmarks face detection 50.

The face detection capacity is evaluated by the Detection Rate (DR) metric. Given a thermal image $I_{w \times h,n}^{thm}$ containing $F_n$ faces, the cardinality yielding the number of face properly detected by the model M1 is defined as $|M1(I_{w \times h,n}^{thm})| = F$. F denotes the number of correct face detected. In particular, a detected face $F_{w_c \times h_c,n}^f$ is only considered as a correct face detected if the sub-cropping image of size $w_c \times h_c$ contains at least eyes 123, 126 and mouth 122. Hence, the face DR per image is given by the ratio $|M1(I_{w \times h,n}^{thm})|/F_n$ and the total face DR assessed by M1, noted DR$_{M1}$ is formulated as

$$DR_{M1} = \frac{1}{N} \sum_{n=1}^{N} \frac{|M1(I_{w \times h,n}^{thm})|}{F_n}$$

N represents the total number of images tested and $F_n$ is the real number of face present in the n-th images.

Relating to the landmark detection when applying model M2, the location performance is evaluated by the Normalized Point-to-Point Error (NPPE) metric. Given a set of N testing thermal images $\{I_{w \times h,n}^{thm}\}_{n=1}^{N}$ and a detected $F_{w_c \times h_c,n}^{f}$ face, the NPPE metric computed for a particular landmark k $\in$ [1; 68] in the f-th face present in the n-th image is referred to as $P_k^{f,n}$ and defined as follow

$$P_k^{f,n} = \frac{\sqrt{(l_k^{f,n} - \hat{l}_k^{f,n})^2}}{d_{FD}},$$

Where $l$ is the desired coordinates and $\hat{l}$ the estimated coordinates provided by the method. The quantity $d_{FD}$ represents the diagonal of the face bounds provided by the $F_{w_c \times h_c,n}^{f}$ shape and is introduced in order to normalize the Euclidean distance computed between the ground truth and the predicted value. Face diagonal is used instead of Inter Ocular Distance (IOD) for normalization because the quantity is more stable under in-the-wild scenario, especially for non-frontal facial pose.

By imposing a fixed threshold $\lambda$, the performance of the model can be reformulated in terms of landmark DR. A good landmark detection is reached when

$$P_k^{f,n} \leq \lambda.$$

Therefore, the landmark DR computed for a fixed face f $\in$ [1; $F_n$] present in n-th image is defined as

$$\varepsilon_f^n = \frac{1}{68} \sum_{k=1}^{68} \mathbb{1}_{\{P_k^{f,n} \leq \lambda\}}$$

and also generalized to all faces present in the n-th image

$$E_n = \frac{1}{F_n} \sum_{f=1}^{F_n} \varepsilon_f^n$$

where $F_n$ denotes the number of faces detected in the n-th image. Finally, according to the four above equations, the detection score for the $\{I_{w \times h,n}^{thm}\}_{n=1}^{N}$ set is built as follow

$$DR_{M2} = \frac{1}{N} \sum_{n=1}^{N} E_n$$

.

The method aims to provide lower NPPE expressed in the calculation of $P_k^{f,n}$ while a higher DR is obtained with $DR_{M1}$ and $DR_{M2}$.

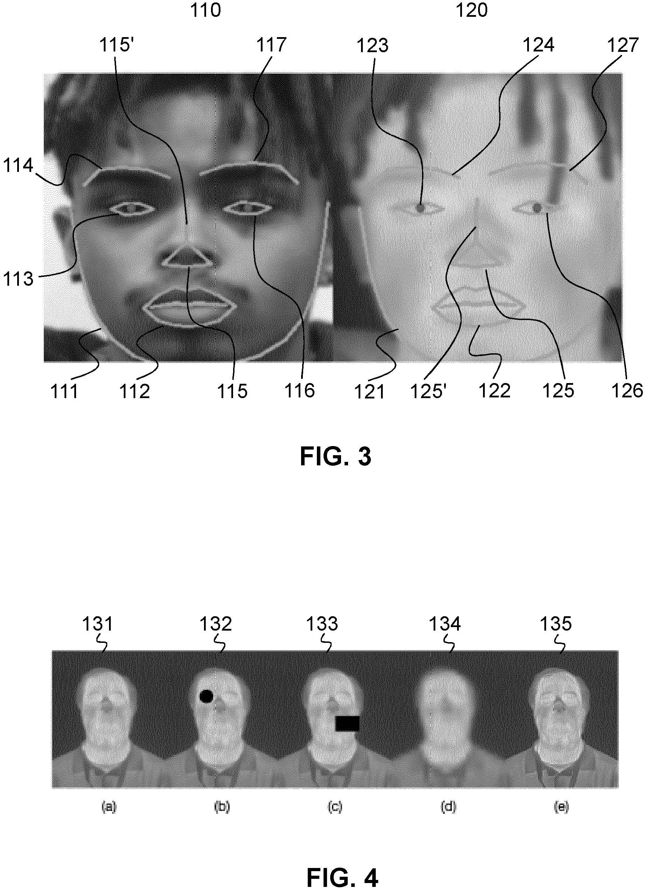

Fig. 3 shows on the left a visible light face image 110 and on the right a thermal face image 120. These images 110 and 120 are aligned and synchronised. Facial landmarks are extracted from the visible light image 110 and shared to the thermal counterpart 120. The extraction method can rely on Dlib, in order to extract up to 68 landmarks, representing salient regions of the face such an eye 113 or 116, eyebrows 114 or 117, nose 115, mouth 112 and jawline 111.

Relating the initial offline creation step of a ground truth reference database, it is noted that a thermal face database is affected by the lack of labelled data and the few available database usually includes limited numbers of key points such as left and right eye, nose, and left and right mouth corner. As a result very limited work has focused on thermal facial landmark detection task. To enable key point augmentation in the thermal field, the present method rely on Dlib, a state of the art facial detector in the visible field, see http://dlib.net/face_detector.py.html. The network extracts 68 landmarks representing salient regions of the face such as eyes, eyebrows, nose, mouth and jawline.

The method is based on creating, acquiring or just using a large scale database including synchronized and aligned visible-thermal face pairs. If this set of images has to be constructed, then the basic step comprises acquiring a visible light face image 110 set and a thermal face image 120 set of the same plurality of persons.

Each visible light face image 110 has to be aligned and synchronized with the associated thermal face image 120. Then facial landmarks are extracted from the visible face 110 and shared to the thermal counterpart face 120 in order to be used as ground truth references.

The method is shown in Fig. 2, thus giving a full facial landmark annotation when transferred to the original thermal images.

The method applies the step of extracting visible image facial landmarks 111, 112, 113, 114, 115, 116, 117 from the visible light face image 110 and transfer these visible image landmarks on the associated thermal face image 120 as thermal image facial landmarks 121, 122, 123, 124, 125, 126, 127.

The symmetry of the face could disrupt the landmark labelling, thus detected key points can be classified erroneously as the opposite label. For instance, the model can confuse a left eye 116 label with a right eye 113 label and therefore provides two different landmarks with the same label. Preferably, a geometric reasoning process is applied in order to guide the labelling detection. In particular, the reasoning step is based on the vertical symmetry bounded by the centre 115' of the nose. Since the nose 115 is the central element of the face, its coordinates in x-axis separate the face into a right and a left part. Therefore, landmarks with x-axis coordinates lower than the x-axis nose coordinate mean that the label falls into the left part, and vice versa. This separation is also transferrable as 125' on the thermal image.

Based on the set of images, the method comprises creating a benchmark of annotation of landmarks of the thermal face image 120 set as ground truth reference.

Fig. 4 now shows a data augmentation step of an original thermal image 131 to enhance robustness of the detection. Data augmentation is used as a suite of techniques that simulates a wide array of thermal real world conditions such as occlusions, low resolution degradation and long range acquisition variations. Fig. 4 highlights the specific enlargement brings to the training set. The original image 131 is augmented by introducing e.g. a set of a 4 circles occlusion as image 132, a 4 rectangles occlusions as image 133, a low resolution degradation 134 and a FSR or TFR enhancement 135. Applying these augmentations in the simulations allows the model to be robust to different thermal conditions in unconstrained environment, thus adaptive to the in-the-wild scenario.

To evaluate the effectiveness of the method according to the invention, a series of test on the ARL-VTF database including baseline, expression and pose sequences was conducted under several variations: Raw, Sharp, Occlusion and Poor image quality, wherein Raw is related to the original thermal image quality.

An experiment has been carried out with the large scale ARLVisible Thermal Face dataset (ARL-VTF) published by Domenick Poster, Matthew Thielke, Robert Nguyen, Srinivasan Rajaraman, Xing Di, Cedric Nimpa Fondje, Vishal M. Patel, Nathaniel J. Short, Benjamin S. Riggan, Nasser M. Nasrabadi, and Shuowen Hu, under "A large-scale time-synchronized visible and thermal face dataset," in IEEE Winter Conference on Applications of Computer Vision, 2021. The set contains a collection of paired visible and thermal face from 345 subjects with over 500,000 images including baseline (frontal face), occlusion (eyeglasses), expression (lips movements) and pose (yaw angles beyond 20) sequences. The acquisition mode was run in a time synchronized manner and included eye, nose and mouth key point annotations. By following the established evaluation protocol, 295 subjects were assigned for training and 100 subjects for testing.

In view of the face detection, where the model M1 is responsible of the face detection and Table 1 reports the performance in terms of detection rate $DRM_1$ x 100%.

Table 1

| TFLD - M1 | Raw | Sharp (TFR) | Occlusion | Poor Resolution |
|---|---|---|---|---|
|  |  |  |  |  |
| Baseline | 100 | 100 | 100 | 100 |
| Expression | 100 | 100 | 100 | 100 |
| Pose | 99.07 | 99.15 | 98.96 | 98.95 |

When tested on baseline and expression subsets, M1 demonstrates perfect robustness since 100% faces are properly detected under all variations. Both baseline and expression sequences do not differ in terms of face appearance as the change is lips motion and therefore has no impact on the face detection. However, the performance is slightly degraded when dealing with off pose conditions with some nuance. It is observed that TFR filter still improves the performance from 99.07% to 99.15% and on the other hand occlusions and poor image quality variations decrease the score from 99.07% to 98.96% and 98.95% respectively.

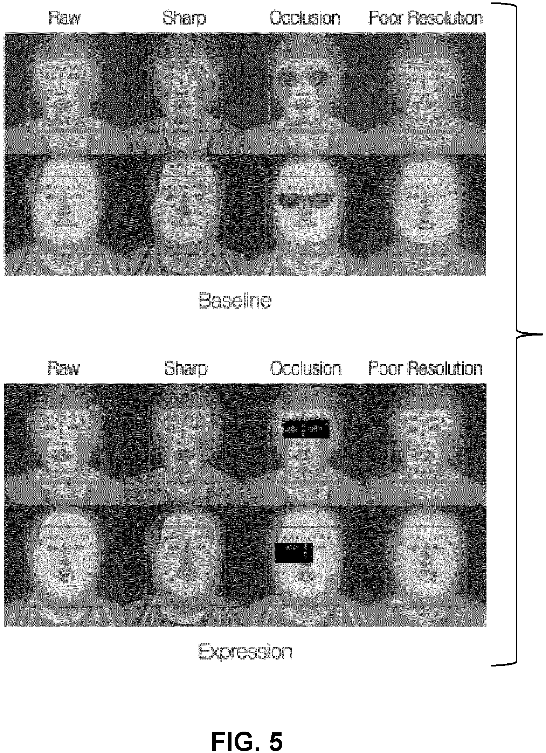

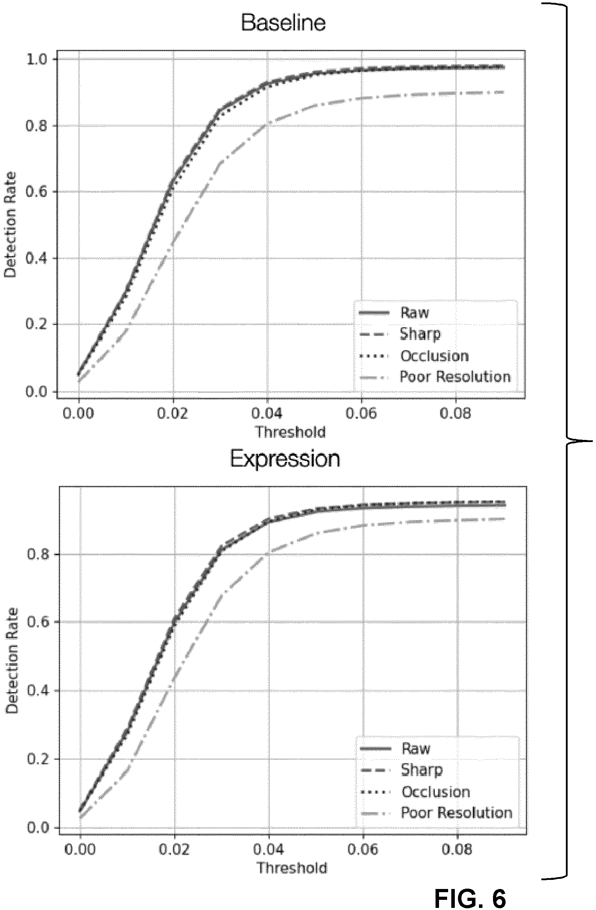

Fig. 5 shows two sets of visualizations of various faces and relating landmark detection for baseline and expression; and Fig. 6 shows two graphs relating to the results of measurements of Fig. 5.

The boxes of Fig. 5 relate to the face detection in each case while the points show the key points as detected by model M2 out of the 68 facial key points. The point detection was always accurate in all scenarios. The TFR enhancement enables much more detected points, especially in the poor resolution variation. Occlusions such as glasses or simulated black boxes do not disturb the correct point locations. The detection rate $DR_{M2}$ is shown in Fig. 6 and illustrate the quantitative results. When the threshold is set to $\lambda = 0$, all sequences report a non-null DR meaning that some landmarks are strictly well predicted. When $\lambda$ increases, the baseline sequence easily reach the maximum DR, while for both expression and pose sequences (not shown since some parts of the facial region is usually hidden, when the face is not facing the camera) scores are stabilizing below. In any case TFR filter outperform the performance, thus proving its efficiency compared to the raw variation subset on directly gathered image material. Moreover, occlusion variation provide similar DR to raw or sharp variations which also reflects its good ability to detect landmarks on facial hidden areas. Finally there is a gap in DR concerning images of poor resolution. Lack of quality prevents slightly the detection, heavily accentuated when the face is not frontal.

LIST OF REFERENCE SIGNS

| | | | |
|---|---|---|---|
| 10 | thermal image | 115 | nose |
| 20 | face in an image | 115' | nose axis |
| 21 | detected face | 116 | eye |
| 30 | cropping of an image | 117 | eyebrow |
| 35 | cropped face thermal image | 120 | thermal face image |
| 35' | thermal image | 121 | jawline |
| 40 | Gaussian filters method or FSR | 122 | mouth |
| | | 123 | eye |
| 40' | TFR Thermal Face Restoration | 124 | eyebrow |
| | | 125 | nose |
| 45 | improved cropped thermal image | 125' | nose axis |
| | | 126 | eye |
| 45' | thermal image | 127 | eyebrow |
| 50 | landmark detector | 131 | raw image |
| 55 | landmarked cropped face thermal image | 132 | 4 circles occlusion |
| | | 133 | 4 rectangles occlusion |
| 110 | visible light face image | 134 | low resolution degradation |
| 111 | jawline | 135 | FSR or TFR enhancement (depending if applied as pre- or postprocessing filter) |
| 112 | mouth | | |
| 113 | eye | | |
| 114 | eyebrow | | |

**EP 4 198 927 A1**

**Claims**

1. A thermal face and landmark detection method comprises:

    providing a ground truth reference database,
    capturing a thermal image (10) comprising at least one face (20);
    detecting one or more faces (21) in the thermal image (10);
    applying a thermal face restoration filter method (40') to the number of detected face thermal images (35') creating a corresponding number of improved face thermal images (45');
    cropping (30) the number of improved face thermal images (45') creating a corresponding number of cropped improved face thermal image (45);
    applying a landmark detector (50) to the improved cropped face thermal image (45) creating an landmarked cropped face thermal image (55); and
    applying face recognition on the landmarked cropped face thermal image (55) against the ground truth reference database.

2. A thermal face and landmark detection method comprises:

    providing a ground truth reference database,
    capturing a thermal image (10) comprising at least one face (20);
    detecting a face (21) in the thermal image (10);
    cropping (30) the thermal image (10) creating a cropped face thermal image (35);
    applying a Gaussian filters method (40) to the cropped face thermal image (35) creating an improved cropped face thermal image (45);
    applying a landmark detector (50) to the improved cropped face thermal image (45) creating an landmarked cropped face thermal image (55); and
    applying face recognition on the landmarked cropped face thermal image (55) against the ground truth reference database.

3. The thermal face and landmark detection method according to claim 1 or 2, wherein the step of detecting a face (21) in the thermal image (10) comprises application of an object detector (30).

4. The thermal face and landmark detection method according to claim 3, wherein the object detector (30) and the landmark detector (50) are based on Yolo, especially YoloV5.

5. A method for creating a landmark database of a thermal face image (120) set as ground truth reference database comprising the steps of

    acquiring a visible light face image (110) set and a thermal face image (120) set of the same plurality of persons,
    aligning and synchronizing each visible light face image (110) with the associated thermal face image (120),
    extracting visible image facial landmarks (111, 112, 113, 114, 115, 116, 117) from the visible light face image (110) and transfer these visible image landmarks on the associated thermal face image (120) as thermal image facial landmarks (121, 122, 123, 124, 125, 126, 127),
    creating a benchmark of annotation of landmarks of the thermal face image (120) set as ground truth reference database.

6. The method according to claim 5, wherein the visible image facial landmarks (111 to 117) represent salient regions of the face, especially taken from the group comprising eye (113, 116), eyebrows (114, 117), nose (115), mouth (112) and jawline (111).

7. The method according to claim 6, wherein the visible image facial landmarks for the left and for the right version of eyes (113, 116) are discriminated by the vertical symmetry axis of the visible image facial landmark of the nose (115).

8. The method according to any one of claims 5 to 7, wherein extracting visible image facial landmarks (111 to 117) is based on Dlib.

9. The method according to any one of claims 5 to 8, wherein the thermal images (120) of a visible image (110) - thermal image (120) pair are augmented, especially augmented by introducing a set of a 4 circles occlusion (132),

9

a 4 rectangles occlusions (133), a low resolution degradation (134) and a FSR enhancement (135).

10. A thermal face recognition method, comprising an initial offline creation step of a ground truth reference database according to any one of claims 5 to 9 and a subsequent real-time online face recognition step according to any one of claims 1 to 4.

11. Use of the landmark ground truth reference database according to any one of claims 5 to 9 for annotating a thermal face database without referenced data.

**FIG. 1**

EP 4 198 927 A1

**FIG.2**

EP 4 198 927 A1

FIG. 3

FIG. 4

FIG. 5

FIG. 6

Europäisches
Patentamt
European
Patent Office
Office européen
des brevets

# EUROPEAN SEARCH REPORT

**Application Number**

EP 21 30 6773

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIN KEONG ET AL: "Multi-spectral Facial Landmark Detection", ARXIV.ORG, CORNELL UNIVERSITY LIBRARY, 201 OLIN LIBRARY CORNELL UNIVERSITY ITHACA, NY 14853, 9 June 2020 (2020-06-09), XP081693878, * the whole document * | 1-11 | INV.<br>G06V40/16<br>G06V10/10<br>G06V10/82<br>G06K9/62 |
| A | DONG CHUNHUA ET AL: "Polarimetric thermal-to-visible heterogeneous face recognition using coupled independent component analysis", ALGORITHMS AND TECHNOLOGIES FOR MULTISPECTRAL, HYPERSPECTRAL, AND ULTRASPECTRAL IMAGERY XIX – PROCEEDINGS OF SPIE, SPIE, US, vol. 11741, 12 April 2021 (2021-04-12), pages 117410L-117410L, XP060143917, ISSN: 0277-786X, DOI: 10.1117/12.2588005 ISBN: 978-1-5106-4548-6 * Section 3.2 * | 1-11 | |
| A | SHORT NATHANIEL ET AL: "Exploiting polarization-state information for cross-spectrum face recognition", 2015 IEEE 7TH INTERNATIONAL CONFERENCE ON BIOMETRICS THEORY, APPLICATIONS AND SYSTEMS (BTAS), IEEE, 8 September 2015 (2015-09-08), pages 1-6, XP032833272, DOI: 10.1109/BTAS.2015.7358758 [retrieved on 2015-12-16] * Section 3 * | 1-11 | **TECHNICAL FIELDS SEARCHED (IPC)**<br>G06V<br>G06K |

-/--

The present search report has been drawn up for all claims

| Place of search | Date of completion of the search | Examiner |
|---|---|---|
| The Hague | 25 May 2022 | Koutroumpas, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PETROVIC RANKO ET AL: "Thermal Imagery Noise Influence on Face Recognition Performance", 2019 18TH INTERNATIONAL SYMPOSIUM INFOTEH-JAHORINA (INFOTEH), IEEE, 20 March 2019 (2019-03-20), pages 1-5, XP033551857, DOI: 10.1109/INFOTEH.2019.8717662 [retrieved on 2019-05-16] * Section II * ----- | 1-11 | |

TECHNICAL FIELDS SEARCHED (IPC)

The present search report has been drawn up for all claims

| Place of search | Date of completion of the search | Examiner |
|---|---|---|
| The Hague | 25 May 2022 | Koutroumpas, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **POSTER, DOMENICK ; HU, SHUOWEN ; NASRABADI, NASSER et al.** An examination of deep-learning based landmark detection methods on thermal face imagery. *Proceedings of the IEEE/CVF Conference on Computer Vision and Pattern Recognition Workshops,* 2019, 0-0
- Thermal facial landmark detection by deep multi-task learning. **CHU, WEI-TA ; LIU, YU-HUI.** 2019 IEEE 21st International Workshop on Multimedia Signal Processing (MMSP). IEEE, 2019, 1-6
- Facial landmark detection on thermal data via fully annotated visible-to-thermal data synthesis. **MALLAT, KHAWLA ; DUGELAY, JEAN-LUC.** 2020 IEEE International Joint Conference on Biometrics (IJCB). IEEE, 2020, 1-10
- Multi-spectral Facial Landmark Detection. **KEONG, JIN ; DONG, XINGBO ; JIN, ZHE et al.** 2020 IEEE International Workshop on Information Forensics and Security (WIFS). IEEE, 2020, 1-6
- Visible-to-thermal transfer learning for facial landmark detection. **POSTER, DOMENICK D. ; SSHUOWEN, SHORT ; NATHAN J. et al.** IEEE access. 2021, vol. 9, 52759-52772
- **DOMENICK POSTER ; MATTHEW THIELKE ; ROBERT NGUYEN ; SRINIVASAN RAJARAMAN ; XING DI ; CEDRIC NIMPA FONDJE ; VISHAL M. PATEL ; NATHANIEL J. SHORT ; BENJAMIN S. RIGGAN ; NASSER M. NASRABADI.** A large-scale time-synchronized visible and thermal face datase. *IEEE Winter Conference on Applications of Computer Vision,* 2021